# EUROPÄISCHE PATENTSCHRIFT

(11) **EP 2 475 220 B1**
(45) Veröffentlichungstag und Bekanntmachung des Hinweises auf die Patenterteilung: **13.04.2016**
(21) Anmeldenummer: 11195567.0
(22) Anmeldetag: 23.12.2011
(51) Int. Cl.: H05B 6/12

(54) **Kochfeldvorrichtung**
Hotplate device
Dispositif de champ de cuisson

(30) Priorität: 10.01.2011 ES 201130012
(43) Veröffentlichungstag der Anmeldung: 11.07.2012
(73) Patentinhaber: BSH Hausgeräte GmbH, 81739 München (DE)
(72) Erfinder: Almolda Fandos, Manuel, 50019 Zaragoza (ES); Perez Cabeza, Pilar, 50008 Zaragoza (ES); Pina Gadea, Carmelo, 50008 Zaragoza (ES); Torrubia Marco, Demetrio, 50003 Zaragoza (ES); Valencia Betran, María, 50010 Zaragoza (ES); Arnal Valero, Adolfo, 50009 Zaragoza (ES); Ceamanos Gaya, Jesús, 50016 Zaragoza (ES); Dionisio Micolau, Diego, 50013 Zaragoza (ES); Ferrer Salillas, Alejandro Jesus, 50010 Zaragoza (ES); Garcia Herrer, Antonio José, 50018 Zaragoza (ES); Hernandez Blasco, Pablo Jesus, 50410 Cuarte de Huerva (Zaragoza) (ES); Martin Gomez, Damaso, 20012 Zaragoza (ES); Ortiz Sainz, David, 50298 Pinseque (Zaragoza) (ES)

(56) Entgegenhaltungen:
- EP-A2- 2 427 032
- DE-A1- 4 224 405
- DE-A1-102007 032 762
- DE-U1-202009 000 990

## Beschreibung

Die Erfindung geht aus von einer Kochfeldvorrichtung nach dem Oberbegriff des Anspruchs 1. Eine solche Kochfeldvorrichtung ist bereits aus DE 10 2007 032 762 A1 bekannt.

Es sind Kochfeldvorrichtungen, insbesondere Induktionskochfeldvorrichtungen, mit einem Abschirmelement aus Aluminium für Heizelemente und einer Abdeckeinheit zu einer Abdeckung eines Kochfelds auf einer von einer Kochfeldplatte abgewandten Seite bekannt.

Die Aufgabe der Erfindung besteht insbesondere darin, eine gattungsgemäße Kochfeldvorrichtung mit einem geringen Montageaufwand bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung ist durch die Merkmal von Anspruch 1 definiert.

Es wird vorgeschlagen, dass die Abdeckeinheit in wenigstens einem Garbetriebszustand von dem Abschirmelement gehalten ist. Vorzugsweise ist die Kochfeldvorrichtung als Induktionskochfeldvorrichtung eines Induktionskochfelds ausgebildet. Unter einem "Abschirmelement" soll insbesondere ein Bauelement verstanden werden, welches dazu vorgesehen ist, insbesondere hochfrequente elektrische Felder abzuschirmen. Unter "abschirmen" soll insbesondere abschwächen um zumindest 20%, vorzugsweise um wenigstens 40% und besonders vorteilhaft um mindestens 60% verstanden werden. Vorzugsweise ist das Abschirmelement dazu vorgesehen, von zumindest einem Heizelement ausgehende elektrische Felder abzuschirmen, insbesondere gegen eine Stromversorgungseinheit. Vorzugsweise ist das Abschirmelement flächig zwischen dem Heizelement und der Stromversorgungseinheit angeordnet. Darunter, dass "das Abschirmelement flächig zwischen dem Heizelement und der Stromversorgungseinheit angeordnet" ist, soll insbesondere verstanden werden, dass jede Gerade, welche einen beliebigen Punkt des Heizelements und einen beliebigen Punkt der Stromversorgungseinheit schneidet, zumindest einen Schnittpunkt mit dem Abschirmelement aufweist. Vorzugsweise umgreift das Abschirmelement das Heizelement zumindest teilweise. Darunter, dass eine erste Einheit eine zweite Einheit "zumindest teilweise umgreift", soll insbesondere verstanden werden, dass ein Schnittpunkt von zumindest zwei Flächennormalen zweier Wandflächen der ersten Einheit, welche insbesondere einen Winkel zwischen 0° und 180° einschließen, auf derselben Seite der ersten Einheit liegt wie die zweite Einheit. Unter einer "Flächennormalen" einer Fläche ist insbesondere eine Gerade zu verstehen, die auf der Fläche senkrecht steht. Insbesondere besteht das Abschirmelement zumindest teilweise und vorzugsweise vollständig aus einem Metall, insbesondere aus einem unmagnetischen Metall und besonders vorteilhaft aus Aluminium und/oder einer Aluminiumlegierung. Unter einem "unmagnetischen Metall" soll insbesondere ein diamagnetisches und/oder paramagnetisches Metall verstanden werden. Insbesondere weicht eine Permeabilitätszahl des unmagnetischen Metalls höchstens um 1%, vorzugsweise maximal um 0,1% und besonders vorteilhaft höchstens um 0,01% von eins ab. Unter "vorgesehen" soll insbesondere speziell ausgelegt und/oder ausgestattet und/oder programmiert verstanden werden. Vorzugsweise umfasst die Kochfeldvorrichtung zumindest zwei Abschirmelemente, die insbesondere einen von null verschiedenen gegenseitigen Abstand aufweisen, wobei besonders vorteilhaft jeder Heizzone eines Kochfelds eine Abschirmeinheit zugeordnet ist. Unter einer "Heizzone" soll insbesondere ein Flächenbereich auf einer Kochfeldplatte des Kochfelds verstanden werden, der insbesondere in wenigstens einem Garbetriebszustand zumindest teilweise von einem auf der Kochfeldplatte abgestellten Gargeschirr bedeckt ist, wobei dem Gargeschirr durch wenigstens ein der Heizzone zugeordnetes Heizelement Wärme zugeführt wird. Insbesondere kann eine Heizzone in mehrere Unterzonen aufgeteilt sein, wobei vorzugsweise jeder Unterzone genau ein Heizelement zugeordnet ist. Unter einer "Kochfeldplatte" soll insbesondere eine ebene Platte verstanden werden, welche in wenigstens einem Garbetriebszustand ein zu erhitzendes Gargeschirr trägt. Vorzugsweise besteht die Kochfeldplatte zumindest zu einem Großteil aus einer Glaskeramik. Darunter, dass die Kochfeldplatte "zumindest zu einem Großteil" aus einer Glaskeramik besteht, soll insbesondere verstanden werden, dass die Kochfeldplatte zu einem Massenanteil von zumindest 80%, insbesondere von wenigstens 90% und vorzugsweise von mindestens 95% aus der Glaskeramik besteht.

Unter einem "Heizelement" soll insbesondere ein Element verstanden werden, das dazu vorgesehen ist, elektrische Energie in Wärme umzuwandeln. Insbesondere ist das Heizelement ein Widerstandsheizkörper oder ein Strahlungsheizkörper oder vorzugsweise ein Induktionsheizkörper, der dazu vorgesehen ist, elektrische Energie indirekt über induzierte Wirbelströme in Wärme umzuwandeln. Unter einer "Stromversorgungseinheit" soll insbesondere eine elektronische Einheit zu einer Ansteuerung des Heizelements verstanden werden. Insbesondere ist die Stromversorgungseinheit dazu vorgesehen, das Heizelement mit Strom, vorzugsweise mit hochfrequentem Wechselstrom, zu versorgen. Vorzugsweise umfasst die Stromversorgungseinheit eine Leistungselektronikeinheit, die in wenigstens einem Garbetriebszustand eine Gesamtleistung von zumindest 500 W, insbesondere von wenigstens 1000 W, vorzugsweise von mindestens 1500 W und besonders vorteilhaft von zumindest 2000 W bereitstellt. Unter einer "Abdeckeinheit" soll insbesondere eine Baueinheit verstanden werden, die das Kochfeld in einem montierten Zustand auf einer der Kochfeldplatte gegenüberliegenden Seite begrenzt. Insbesondere bildet die Abdeckeinheit einen Teil eines Außengehäuses des Kochfelds. Vorzugsweise ist die Abdeckeinheit zumindest teilweise und besonders vorteilhaft vollständig aus einem Blechteil, insbesondere einem Stanz-Biege-Blechteil gebildet. Vorzugsweise weist die Abdeckeinheit Befestigungsmittel, insbesondere Ausnehmungen für eine Schraubverbindung, zu einer Befestigung der Abdeckeinheit an einem anderen Bauteil, insbesondere einem mit dem Abschirmelement verbundenen Bauteil, auf.

Darunter, dass eine erste Einheit von einer zweiten Einheit "in wenigstens einem Garbetriebszustand gehalten ist", soll insbesondere verstanden werden, dass in dem Garbetriebszustand ein, insbesondere durch eine Gewichtskraft der ersten Einheit ausgelöster, direkter Kraftfluss und/oder indirekter Kraftfluss, insbesondere über eine zusätzliche dritte Einheit, von der ersten Einheit zu der zweiten Einheit auftritt. Unter einem "Kraftfluss" soll insbesondere ein Weg einer Kraft und/oder eines Moments in einer Baugruppe von einem Angriffspunkt, insbesondere einer Stelle einer Einleitung einer Gewichtskraft, bis zu einer Stelle, an der diese durch eine Reaktionskraft, insbesondere eine Haltekraft, und/oder ein Reaktionsmoment aufgenommen wird. Insbesondere wird eine Gewichtskraft der ersten Einheit direkt und/oder indirekt, insbesondere über die dritte Einheit, an der zweiten Einheit abgestützt und/oder von der zweiten Einheit aufgenommen. Unter einem "Garbetriebszustand" soll in diesem Zusammenhang insbesondere ein Betriebszustand des Kochfelds verstanden werden, in welchem dieses wenigstens ein Gargut beheizt und sich daher insbesondere in zumindest einer Einbaulage befindet. Unter einer "Einbaulage" soll insbesondere eine Winkelorientierung des Kochfelds relativ zu einer Schwerkraftrichtung verstanden werden, welche einer Winkelorientierung relativ zur Schwerkraftrichtung in einem eingebauten Zustand des Kochfelds, insbesondere in einer Arbeitsplatte, vorzugsweise einer Küchenarbeitsplatte, entspricht.

Durch eine solche Ausgestaltung kann eine Kochfeldvorrichtung mit einem geringen Montageaufwand bereitgestellt werden, wodurch Fertigungsfehler vorteilhaft zumindest reduziert werden können. Des Weiteren kann Material eingespart werden und es kann eine Gesamtzahl Bauteile reduziert werden. Hierdurch können Kosten eingespart werden. Wenn das Abschirmelement genau ein Heizelement und/oder genau eine Gruppe von einer Heizzone zugeordneten Heizelementen trägt, kann eine hohe Flexibilität in einer Platzierung der Heizelemente erzielt werden.

In einer bevorzugten Ausgestaltung der Erfindung wird vorgeschlagen, dass die Abdeckeinheit das Abschirmelement zumindest teilweise umgreift. Hierdurch kann eine geschlossene Außenhülle des Kochfelds erreicht werden, welche insbesondere nur durch die Kochfeldplatte und die Abdeckeinheit gebildet ist. Hierdurch kann ein Reinigungsaufwand vorteilhaft reduziert werden. Ferner kann ein Montageaufwand weiter reduziert werden.

Erfindungsgemäß weist die Kochfeldvorrichtung eine Kochfeldplatte auf, durch welche das Abschirmelement in wenigstens einem Garbetriebszustand gehalten ist. Erfindungsgemäß ist das Abschirmelement lösbar an der Kochfeldplatte mittels einer Rastverbindung befestigt. Unter einer "Rastverbindung" soll insbesondere eine zumindest formschlüssige Verbindung verstanden werden, wobei ein Formschluss durch eine elastische Kraft, insbesondere eines Rastelements, aufrechterhalten wird. Unter einem "Rastelement" soll insbesondere ein Element zu einer Herstellung einer Rastverbindung verstanden werden, welches bei einem Befestigungsvorgang elastisch ausgelenkt wird, um anschließend durch eine innere Spannkraft hinter einem korrespondierenden Rastelement, insbesondere dem Abschirmelement, einzurasten. Hierdurch kann ein Montageaufwand weiter reduziert werden. Des Weiteren kann auf einen Halterahmen verzichtet werden, wodurch Material und Bauraum eingespart werden kann. Ferner kann eine Flachheit der Kochfeldplatte erhalten bleiben und vorteilhaft sogar verbessert werden, insbesondere wenn die Abdeckeinheit das Abschirmelement zumindest teilweise umgreift.

Erfindungsgemäß weist die Kochfeldvorrichtung zumindest ein Rastelement auf, durch welches das Abschirmelement in wenigstens einem Garbetriebszustand an der Kochfeldplatte gehalten ist. Vorzugsweise ist das Rastelement mit der Kochfeldplatte verklebt. Darunter, dass die Abschirmeinheit in wenigstens einem Garbetriebszustand durch das Rastelement "an der Kochfeldplatte gehalten ist", soll insbesondere verstanden werden, dass das Rastelement an der Kochfeldplatte gehalten ist und dass das Abschirmelement am Rastelement gehalten ist. Hierdurch kann ein Montageaufwand besonders vorteilhaft reduziert werden.

Vorteilhaft weist die Kochfeldvorrichtung eine Stromversorgungseinheit auf, die in wenigstens einem Garbetriebszustand von dem Abschirmelement gehalten ist. Hierdurch kann ein geringer Montageaufwand erzielt werden. Des Weiteren kann eine sichere Verbindung zwischen der Stromversorgungseinheit und dem Abschirmelement erreicht werden. Insbesondere wenn das Heizelement in wenigstens einem Garbetriebszustand durch das Abschirmelement gehalten ist, kann ein sicherer Betrieb gewährleistet werden.

In einer weiteren Ausgestaltung der Erfindung wird vorgeschlagen, dass die Stromversorgungseinheit in wenigstens einem Garbetriebszustand von der Abdeckeinheit gehalten ist. Vorzugsweise wird bei einer Befestigung der Abdeckeinheit an dem Abschirmelement gleichzeitig die Stromversorgungseinheit an dem Abschirmelement befestigt, insbesondere durch zumindest ein gemeinsames Befestigungsmittel. Hierdurch kann ein Montageaufwand besonders vorteilhaft reduziert werden. Es kann auf spezielle Befestigungsmittel für die Stromversorgungseinheit verzichtet werden, wodurch Kosten und Gewicht eingespart werden können.

In einer bevorzugten Ausgestaltung der Erfindung wird vorgeschlagen, dass die Stromversorgungseinheit zumindest ein Elektronikträgerelement und wenigstens einen Kühlkörper aufweist, der auf einer von dem Abschirmelement abgewandten Seite des Elektronikträgerelements angeordnet ist. Unter einem "Elektronikträgerelement" soll insbesondere ein Bauelement verstanden werden, durch das in wenigstens einem Garbetriebszustand zumindest eine Elektronikkomponente der Stromversorgungseinheit und vorzugsweise ein Großteil der Elektronikkomponenten der Stromversorgungseinheit gehalten sind. Vorzugsweise ist durch das Elektronikträgerelement in wenigstens einem Garbetriebszustand der Kühlkörper gehalten. Vorzugsweise ist das Elektronikträgerelement als eine Leiterplatte ausgebildet, die insbesondere zumindest eine Oberfläche aufweist, auf der wenigstens eine Leiterbahn angeordnet ist. Vorzugsweise besteht das Elektronikträgerelement zumindest im Wesentlichen aus einem elektrischen Isolator, insbesondere aus Kunststoff und vorzugsweise aus glasfaserverstärktem Kunststoff. Unter "zumindest im Wesentlichen" soll insbesondere mit einem Massenanteil von wenigstens 75%, vorzugsweise von mindestens 85% und besonders vorteilhaft von zumindest 95% verstanden werden. Unter einem "Kühlkörper" soll insbesondere eine Einheit verstanden werden, die gezielt zur Kühlung weiterer Bauteile, insbesondere der Stromversorgungseinheit, ausgebildet ist und insbesondere mit diesen Bauteilen in thermischem und vorzugsweise in direktem mechanischem Kontakt steht. Der Kühlkörper umfasst insbesondere zumindest 3, vorzugsweise wenigstens 10 und vorteilhaft mindestens 20 Kühlrippen. Vorzugsweise ist der Kühlkörper zumindest teilweise und vorzugsweise vollständig aus einem Material mit einem Wärmeleitfähigkeit von wenigstens 5 W/m/K, insbesondere von zumindest 15 W/m/K, vorteilhaft von mindestens 100 W/m/K und besonders vorteilhaft von wenigstens 200 W/m/K gebildet. Vorteilhaft umfasst das Material Kupfer und/oder Aluminium. Durch eine solche Ausgestaltung kann ein geringer Montageaufwand erzielt werden. Des Weiteren kann Bauraum eingespart werden.

Ferner wird vorgeschlagen, dass die Kochfeldvorrichtung zumindest ein Heizelement aufweist, welches in wenigstens einem Garbetriebszustand von dem Abschirmelement gehalten ist. Hierdurch kann auf konstruktiv einfache Weise eine sichere Halterung des Heizelements erreicht werden. Ferner kann Material und Bauraum eingespart werden. Des Weiteren kann eine Abschirmung der von dem Heizelement ausgehenden elektromagnetischen Wellen konstruktiv besonders einfach erreicht werden. Ferner kann ein vorteilhaft verbessertes Garergebnis erzielt werden, da eine Position des Heizelements unterhalb der Kochfeldplatte zuverlässig festgelegt ist.

Vorteilhaft umfasst die Kochfeldvorrichtung zumindest ein Abstandshalteelement, an welchem die Abdeckeinheit gehalten ist. Unter einem "Abstandshalteelement" soll insbesondere ein Bauelement verstanden werden, welches eine erste Baueinheit und eine zweite Baueinheit beabstandet, wobei die erste Baueinheit in wenigstens einem Garbetriebszustand an der zweiten Baueinheit gehalten ist und insbesondere ein Kraftfluss im Abstandshalteelement auftritt. Vorzugsweise ist das Abstandshalteelement ein zumindest weitgehend starres Bauelement. Unter einem "zumindest weitgehend starren Bauelement" soll insbesondere ein Bauelement verstanden werden, dessen Erstreckung in einer beliebigen Raumrichtung um höchstens 5%, vorzugsweise um maximal 1% und besonders vorteilhaft um höchstens 0,5% veränderbar ist. Das Abstandshalteelement kann einstückig mit dem Abschirmelement ausgebildet sein. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Des Weiteren kann das Abstandshalteelement auf jede, dem Fachmann als sinnvoll erscheinende formschlüssige und/oder kraftschlüssige Art an dem Abschirmelement befestigt sein. Vorzugsweise ist das Abstandshalteelement jedoch mittels einer Schraubverbindung an dem Abschirmelement befestigt. Hierdurch kann eine kraftführende Beabstandung zwischen dem Abschirmelement und der Abdeckeinheit bereitgestellt werden. Des Weiteren kann eine Befestigungsposition der Abdeckeinheit an dem Abschirmelement vorteilhaft angepasst werden, insbesondere an vorhandenen Befestigungsmitteln, insbesondere Befestigungsausnehmungen, der Stromversorgungseinheit. Dies kann zu einer Kostenreduktion beitragen, da eine universelle Einsetzbarkeit bei verschiedenen Kochfeldtypen, insbesondere mit verschiedenen Stromversorgungseinheiten, ermöglicht wird. Ferner kann das Abstandshalteelement über ein von dem Abschirmelement verschiedenes Bauelement oder vorzugsweise unmittelbar, insbesondere durch Verkleben, an der Kochfeldplatte befestigt sein. Hierdurch kann eine Befestigung der Abdeckeinheit an der Kochfeldplatte an Stellen erreicht werden, an denen kein Abschirmelement vorhanden ist. Hierdurch kann eine Einsetzbarkeit bei verschiedenen Kochfeldtypen weiter erhöht werden.

Ferner wird ein Kochfeld, insbesondere ein Induktionskochfeld, mit einer erfindungsgemäßen Kochfeldvorrichtung vorgeschlagen.

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: ein Induktionskochfeld mit einer erfindungsgemäßen Kochfeldvorrichtung in einer Draufsicht,
- Fig. 1b: das Induktionskochfeld aus Fig. 1a mit einem auf ein Abschirmelement geklebten Abstandshalteelement in einer Schnittdarstellung längs einer Linie Ib-Ib in Fig. 1a,
- Fig. 2a: ein weiteres Induktionskochfeld mit einer alternativen Kochfeldvorrichtung mit einem auf ein Abschirmelement geschraubtes Abstandshalteelement in einer Schnittdarstellung und
- Fig. 2b: das Abschirmelement und das Abstandshalteelement der Kochfeldvorrichtung aus Fig. 2a in einer Draufsicht.

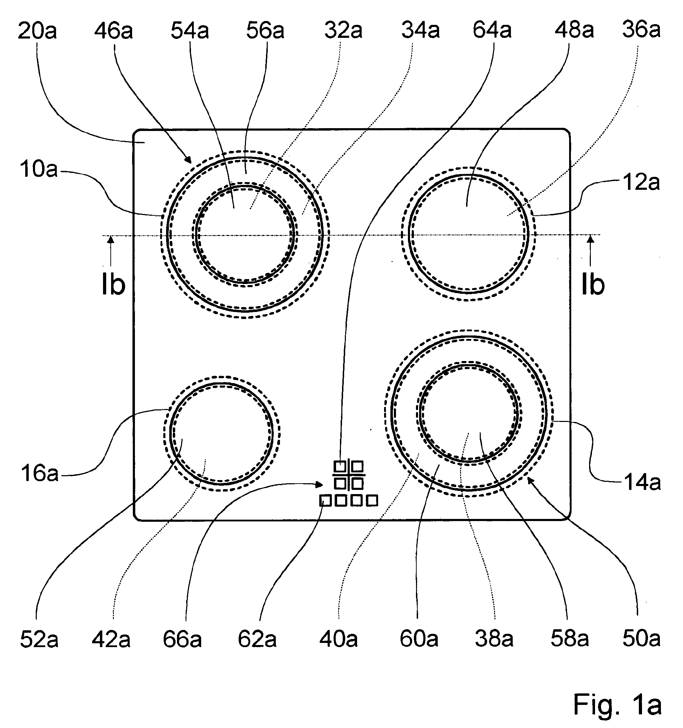

Fig. 1a zeigt eine Draufsicht auf ein Induktionskochfeld mit einer erfindungsgemäßen Kochfeldvorrichtung. Die Kochfeldvorrichtung umfasst eine Kochfeldplatte 20a aus einer Glaskeramik, auf der in bekannter Weise Heizzonen 46a, 48a, 50a, 52a markiert sind. Die Heizzone 46a ist in zwei Unterzonen 54a, 56a unterteilt. Die Heizzone 50a ist in zwei Unterzonen 58a, 60a unterteilt. Den Unterzonen 54, 56, 58, 60 und den Heizzonen 48a, 52a sind jeweils genau ein Heizelement 32a, 34a, 36a, 38a, 40a, 42a der Kochfeldvorrichtung zugeordnet (in Fig. 1a gestrichelt dargestellt). In einem betriebsbereiten Zustand ist die Kochfeldplatte 20a horizontal angeordnet. Die Heizzonen 46a, 48a, 50a, 52a sind zu einem Aufstellen von Gargeschirr vorgesehen. Das Gargeschirr kann durch die den Heizzonen 46a, 48a, 50a, 52a zugeordneten Heizelemente 32a, 34a, 36a, 38a, 40a, 42a erhitzt werden. Hierbei erzeugen die als Induktorspulen ausgeführten Heizelemente 32a, 34a, 36a, 38a, 40a, 42a ein hochfrequentes magnetisches Wechselfeld, welches zumindest in einem ferromagnetischen Boden des Gargeschirrs Wechselströme induziert. Durch Leitungsverluste im Boden des Gargeschirrs wird das Gargeschirr erhitzt. Des Weiteren sind auf der Kochfeldplatte 20a in bekannter Weise berührungsempfindliche Bedienelemente 62a und Anzeigeelemente 64a einer Bedien- und Anzeigeeinheit 66a des Induktionskochfelds markiert.

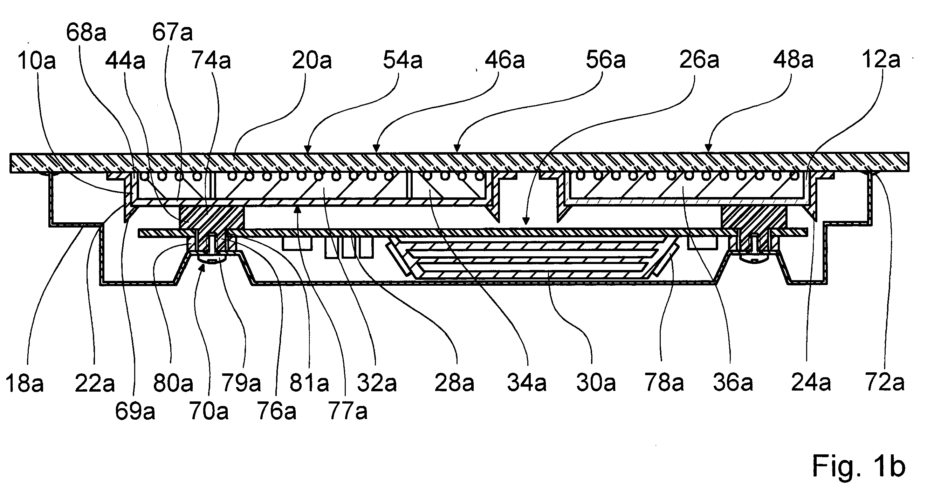

Fig. 1b zeigt einen Schnitt durch das Induktionskochfeld längs einer Linie Ib-Ib in Fig. 1a. Von den Heizelementen 32a, 34a, 36a, 38a, 40a, 42a der Kochfeldvorrichtung sind in Fig. 1b das der Unterzone 54a der Heizzone 46a zugeordnete Heizelement 32a, das der Unterzone 56a der Heizzone 46a zugeordnete Heizelement 34a und das der Heizzone 48a zugeordnete Heizelement 36a dargestellt. Die folgende auf die Heizzone 46a und die Heizelemente 32a, 34a bezogene Beschreibung gilt in gleicher Weise auch für die Heizzone 50a und die dieser zugeordneten Heizelemente 38a, 40a. Die folgende auf die Heizzone 48a und das Heizelement 36a bezogene Beschreibung gilt in gleicher Weise auch für die Heizzone 52a und das dieser zugeordnete Heizelement 42a. Die zwei Heizelemente 32a, 36a sind kreisscheibenförmig ausgebildet. Das Heizelement 34a ist kreisringscheibenförmig ausgebildet und ist radial um das Heizelement 32a angeordnet. Jeder Heizzone 46a, 48a, 50a, 52a ist genau ein Abschirmelement 10a, 12a, 14a, 16a der Kochfeldvorrichtung zugeordnet (in Fig. 1 gestrichelt dargestellt). Die Abschirmelemente 10a, 12a, 14a, 16a bestehen aus Aluminium. Die Abschirmelemente 10a, 12a, 14a, 16a weisen die Form einer flachen, in Richtung der Kochfeldplatte 20a offenen Kreisschale mit einem Boden 67a und einem Rand 68a auf. Das der Heizzone 46a zugeordnete Abschirmelement 10a nimmt die zwei Heizelemente 32a, 34a auf. Das der Heizzone 48a zugeordnete Abschirmelement 12a nimmt das Heizelement 36a auf. Die Heizelemente 32a, 34a sind daher vom Abschirmelement 10a gehalten. Das Heizelement 36a ist vom Abschirmelement 12a gehalten.

Die folgende auf das Abschirmelement 10a bezogene Beschreibung gilt gleichsam auch für alle anderen den Heizzonen 48a, 50a, 52a zugeordneten Abschirmelemente 12a, 14a, 16a. Das Abschirmelement 10a ist mittels vier an der Kochfeldplatte 20a festgeklebter Rastelemente 22a an der Kochfeldplatte 20a gehalten. Auf einer von der Kochfeldplatte 20a abgewandten Seite eines jeden Rastelements 22a ist eine Rastnase 69a angeformt, die in einem montierten Zustand hinter den Boden 67a des Abschirmelements 10a greift. Die Kochfeldvorrichtung umfasst ferner eine Abdeckeinheit 18a, welche einen der Kochfeldplatte 20a gegenüberliegenden Teil eines Außengehäuses des Induktionskochfelds bildet. Die Abdeckeinheit 18a ist aus einem Stanz-Biege-Blechteil gefertigt. Die Abdeckeinheit 18a weist Ausnehmungen 70a für eine Schraubverbindung auf. Die Abdeckeinheit 18a ist von dem Abschirmelement 10a über ein Abstandshalteelement 44a gehalten. Die Abdeckeinheit 18a verläuft über weite Strecken parallel zu der Kochfeldplatte 20a. Die Abdeckeinheit 18a umgreift das Abschirmelement 10a zumindest teilweise. Ein umlaufender Rand der Abdeckeinheit 18a berührt die Kochfeldplatte 20a entlang einer geschlossenen Konturlinie. Entlang der Konturlinie ist Silikon 72a aufgebracht, um eine Abdichtung zwischen der Abdeckeinheit 18a und der Kochfeldplatte 20a zu erreichen.

Das Abstandshalteelement 44a besteht aus Kunststoff. Das Abstandshalteelement 44a ist im Wesentlichen aus zwei koaxialen aneinandergereihten Vollzylindern mit unterschiedlichem Radius gebildet. Der Zylinder mit größerem Radius bildet einen Wulst 74a. Der Zylinder mit kleinerem Radius ist etwas länger als der Wulst 74a und bildet einen Hals 76a. Das Abstandshalteelement 44a ist mit einer von dem Hals 76a abgewandten Grundfläche des Wulsts 74a auf eine äußere Bodenfläche 77a des Abschirmelements 10a geklebt. Eine von dem Wulst 74 abgewandte Grundfläche des Halses 76a weist eine koaxiale Bohrung mit einem Innengewinde auf.

Das Abschirmelement 10a schirmt eine Stromversorgungseinheit 26a der Kochfeldvorrichtung in zumindest einem Garbetriebszustand von einem von den Heizelementen 32a, 34a ausgehenden hochfrequenten elektrischen Wechselfeld ab. Die Stromversorgungseinheit 26a versorgt alle Heizelemente 32a, 34a, 36a, 38a, 40a, 42a der Kochfeldvorrichtung in zumindest einem Betriebszustand mit elektrischer Energie. Die Stromversorgungseinheit 26a umfasst hierzu eine Leistungselektronikeinheit 78a, welche durch einen Kühlkörper 30a der Stromversorgungseinheit 26a gekühlt wird und die einen hochfrequenten Wechselstrom für die Heizelemente 32a, 34a, 36a, 38a, 40a, 42a über in Fig. 1b nicht dargestellte Versorgungsleitungen bereitstellt. Die Stromversorgungseinheit 26a weist ferner ein als Leiterplatte ausgebildetes Elektronikträgerelement 28a auf, auf dem der Kühlkörper 30a und die übrigen elektronischen Komponenten der Stromversorgungseinheit 26a angeordnet sind. Der Kühlkörper 30a ist auf einer von dem Abschirmelement 10a abgewandten Seite des Elektronikträgerelements 28a angeordnet. Das Elektronikträgerelement 28a weist Ausnehmungen 81a auf, wobei durch eine der Ausnehmungen 81a der Hals 76a des Abstandshalteelements 44a ragt. Ein Schraube 79a befestigt die Abdeckeinheit 18a an dem Hals 76a des Abstandshalteelements 44a. Zwischen dem Elektronikträgerelement 28a und der Abdeckeinheit 18a befindet sich ein kreisringscheibenförmiges Abstandselement 80a, welches den Hals 76a umgibt. Somit ist die Stromversorgungseinheit 26a über das Abstandselement 80a von der Abdeckeinheit 18a gehalten. Da die Abdeckeinheit 18a selbst von dem Abschirmelement 10a gehalten ist, ist auch die Stromversorgungseinheit 26a von dem Abschirmelement 10a gehalten. Des Weiteren ist die Stromversorgungseinheit 26a nach oben gegen den Wulst 74a des Abstandshalteelements 44a abgestützt. Hiermit kann sichergestellt werden, dass die Stromversorgungseinheit 26a während eines Transports oder Einbaus des Induktionskochfelds relativ zu der Kochfeldplatte 20a ortsfest ist.

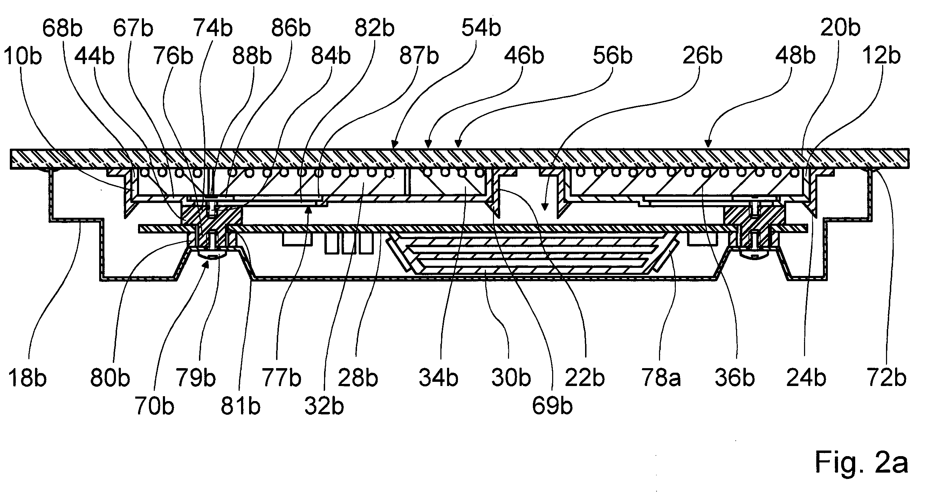

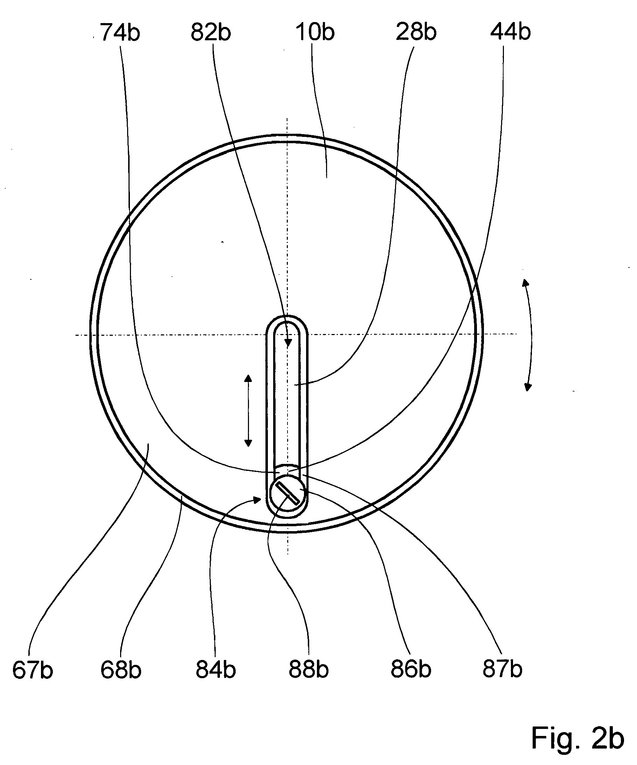

In den Fig. 2a und 2b ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und/oder Funktionen auf die Beschreibung des anderen Ausführungsbeispiels, insbesondere der Fig. 1a und 1b, verwiesen werden kann. Zur Unterscheidung der Ausführungsbeispiele ist der Buchstabe a in den Bezugszeichen des Ausführungsbeispiels in den Fig. 1a und 1b durch den Buchstaben b in den Bezugszeichen des Ausführungsbeispiels der Fig. 2a und 2b ersetzt. Bezüglich gleich bezeichneter Bauteile, insbesondere in Bezug auf Bauteile mit gleichen Bezugszeichen, kann grundsätzlich auch auf die Zeichnung und/oder die Beschreibung des Ausführungsbeispiels der Fig. 1 a und 1 b verwiesen werden.

Fig. 2a zeigt eine alternative Kochfeldvorrichtung, bei der anstatt einer Klebeverbindung zwischen einem Abschirmelement 10b und einem Abstandshalteelement 44b eine Schraubverbindung zum Einsatz kommt. Hierzu weist ein Wulst 74b des Abstandshalteelements 44b eine koaxiale Bohrung mit einem Innengewinde auf. Ein Boden 67b des Abschirmelements 10b ist, wie in Fig. 2b in einer Draufsicht von einer Kochfeldplatte 20b aus auf das Abschirmelement 10b gezeigt, mit einem Langloch 82b ausgestattet. Das Langloch 82b erstreckt sich radial von einem Mittelpunkt des Bodens 67b aus zu einem Bereich eines Rands 68b des Abschirmelements 10b. Das Langloch 82b stellt eine Führung für einen Schraubbolzen 84b dar, der in den Wulst 74b eingeschraubt ist. Ein Schraubenkopf 86b des Schraubbolzens 84b weist einen Durchmesser auf, der größer ist als eine Breite des Langlochs 82b, jedoch kleiner als eine Breite einer Führungsnut 87b. Eine Höhe des Schraubenkopfs 86b ist kleiner als eine Tiefe der Führungsnut 87b, so dass der Schraubenkopf 86b vollständig im Boden 67b des Abschirmelements 10b versenkt ist. Der Schraubenkopf 86b umfasst einen Schlitz 88b, der ein Anziehen des Schraubenbolzens 84b erlaubt. Hierdurch kann der Schraubenbolzen 84b in einer Radialposition relativ zu dem Abschirmelement 10b fixiert werden. Da das Abschirmelement 10b selbst mittels Rastelementen 22b drehbar an der Kochfeldplatte 20b gehalten ist, kann eine Position des Schraubenbolzens 84b an eine Position einer Ausnehmung 70b in einer Abdeckeinheit 18b und/oder einer Ausnehmung 81b eines Elektronikträgerelements 28b einer Stromversorgungseinheit 26b angepasst werden.

In einer alternativen Ausführung kann ein Abstandshalteelement auch aus einem Blech gefertigt sein, dessen Enden zu einer geschlossenen Kontur zusammengebogen und verbunden sind. Des Weiteren kann eine Form eines Abschirmelements auch von der einer Kreisschale abweichen, insbesondere dann, wenn das Abschirmelement einer Heizzone zugeordnet ist, die von einer Kreisform abweicht. Alternativ können anstatt vier Rastelementen zur Halterung eines Abschirmelements auch mehr oder weniger Rastelemente vorhanden sein. Ferner ist anstatt einer Schraubverbindung jede andere, dem Fachmann als sinnvoll erscheinende Befestigungsverbindung denkbar, welche eine Abdeckeinheit mit einem Abschirmelement und/oder eine Stromversorgungseinheit mit einem Abschirmelement verbindet.

**Bezugszeichen**

| | | | |
|---|---|---|---|
| 10 | Abschirmelement | 64 | Anzeigeelement |
| 12 | Abschirmelement | 66 | Bedien- und Anzeigeeinheit |
| 14 | Abschirmelement | 67 | Boden |
| 16 | Abschirmelement | 68 | Rand |
| 18 | Abdeckeinheit | 69 | Rastnase |
| 20 | Kochfeldplatte | 70 | Ausnehmung |
| 22 | Rastelement | 72 | Silikon |
| 24 | Rastelement | 74 | Wulst |
| 26 | Stromversorgungseinheit | 76 | Hals |
| 28 | Elektronikträgerelement | 77 | Äußere Bodenfläche |
| 30 | Kühlkörper | 78 | Leistungselektronikeinheit |
| 32 | Heizelement | 79 | Schraube |
| 34 | Heizelement | 80 | Abstandselement |
| 36 | Heizelement | 81 | Ausnehmung |
| 38 | Heizelement | 82 | Langloch |
| 40 | Heizelement | 84 | Schraubbolzen |
| 42 | Heizelement | 86 | Schraubenkopf |
| 44 | Abstandshalteelement | 87 | Führungsnut |
| 46 | Heizzone | 88 | Schlitz |
| 48 | Heizzone | | |
| 50 | Heizzone | | |
| 52 | Heizzone | | |
| 54 | Unterzone | | |
| 56 | Unterzone | | |
| 58 | Unterzone | | |
| 60 | Unterzone | | |
| 62 | Bedienelement | | |

## Patentansprüche

1. Kochfeldvorrichtung mit zumindest einem Abschirmelement (10a-b, 12ab, 14a-b, 16a-b) und mit einer Abdeckeinheit (18a-b) und mit einer Kochfeldplatte (20a-b), durch welche das Abschirmelement (10a-b, 12a-b, 14a-b, 16a-b) in wenigstens einem Garbetriebszustand gehalten ist, und mit zumindest einem Rastelement (22a-b, 24a-b), durch welches das Abschirmelement (10a-b, 12a-b) in wenigstens einem Garbetriebszustand an der Kochfeldplatte (20a-b) gehalten ist, wobei die Abdeckeinheit (18a-b) in wenigstens einem Garbetriebszustand von dem Abschirmelement (10a-b, 12a-b, 14a-b, 16a-b) gehalten ist.

2. Kochfeldvorrichtung nach Anspruch 1, **dadurch gekennzeichnet, dass** die Abdeckeinheit (18a-b) das Abschirmelement (10a-b, 12a-b, 14a-b, 16a-b) zumindest teilweise umgreift.

3. Kochfeldvorrichtung nach einem der vorhergehenden Ansprüche, **gekennzeichnet durch** eine Stromversorgungseinheit (26a-b), die in wenigstens einem Garbetriebszustand von dem Abschirmelement (10a-b, 12a-b, 14a-b, 16a-b) gehalten ist.

4. Kochfeldvorrichtung nach Anspruch 3, **dadurch gekennzeichnet, dass** die Stromversorgungseinheit (26a-b) in wenigstens einem Garbetriebszustand von der Abdeckeinheit (18a-b) gehalten ist.

5. Kochfeldvorrichtung nach Anspruch 3 oder 4, **dadurch gekennzeichnet, dass** die Stromversorgungseinheit (26a-b) zumindest ein Elektronikträgerelement (28a-b) und wenigstens einen Kühlkörper (30a-b) aufweist, der auf einer von dem Abschirmelement (10a-b, 12a-b, 14a-b, 16a-b) abgewandten Seite des Elektronikträgerelements (28a-b) angeordnet ist.

6. Kochfeldvorrichtung nach einem der vorhergehenden Ansprüche, **gekennzeichnet durch** zumindest ein Heizelement (32a-b, 34a-b, 36a-b, 38a-b, 40a-b, 42a-b), welches in wenigstens einem Garbetriebszustand von dem Abschirmelement (10a-b, 12a-b, 14a-b, 16a-b) gehalten ist.

7. Kochfeldvorrichtung nach einem der vorhergehenden Ansprüche, **gekennzeichnet durch** zumindest ein Abstandshalteelement (44a-b), an welchem die Abdeckeinheit (18a-b) gehalten ist.

8. Kochfeld, insbesondere Induktionskochfeld, mit einer Kochfeldvorrichtung nach einem der vorhergehenden Ansprüche.

## Claims

1. Hob apparatus with at least one shielding element (10a-b, 12a-b, 14a-b, 16a-b) and with a cover unit (18a-b) and with a hob plate (20a-b), by means of which the shielding element (10a-b, 12a-b, 14a-b, 16a-b) is retained in at least one cooking operating state, and with at least one latching element (22a-b, 24a-b), by means of which the shielding element (10a-b, 12a-b) is retained in at least one cooking operating state on the hob plate (20a-b), wherein the cover unit (18a-b) is retained by the shielding element (10a-b, 12a-b, 14a-b, 16a-b) in at least one cooking operating state.

2. Hob apparatus according to claim 1, **characterised in that** the cover unit (18a-b) at least partially encompasses the shielding element (10a-b, 12a-b, 14a-b, 16a-b).

3. Hob apparatus according to one of the preceding claims, **characterised by** a power supply unit (26a-b), which is retained by the shielding element (10a-b, 12a-b, 14a-b, 16a-b) in at least one cooking operating state.

4. Hob apparatus according to claim 3, **characterised in that** the power supply unit (26a-b) is retained by the cover unit (18a-b) in at least one cooking operating state.

5. Hob apparatus according to claim 3 or 4, **characterised in that** the power supply unit (26a-b) has at least one electronics carrier element (28a-b) and at least one cooling body (30a-b) which is disposed on a side of the electronics carrier element (28a-b) facing away from the shielding element (10a-b, 12a-b, 14a-b, 16a-b).

6. Hob apparatus according to one of the preceding claims, **characterised by** at least one heating element (32a-b, 34a-b, 36a-b, 38a-b, 40a-b, 42a-b) which is retained by the shielding element (10a-b, 12a-b, 14a-b, 16a-b) in at least one cooking operating state.

7. Hob apparatus according to one of the preceding claims, **characterised by** at least one spacing element (44a-b) on which the cover unit (18a-b) is retained.

8. Hob, in particular induction hob, with a hob apparatus according to one of the preceding claims.

## Revendications

1. Dispositif de champ de cuisson comprenant au moins un élément de blindage (10a-b, 12a-b, 14a-b, 16a-b) et comprenant une unité de recouvrement (18a-b) et comprenant une plaque de champ de cuisson (20a-b) au moyen de laquelle l'élément de blindage (10a-b, 12a-b, 14a-b, 16a-b) est maintenu dans au moins un état de fonctionnement de cuisson, et comprenant au moins un élément d'encliquetage (22a-b, 24a-b) au moyen duquel l'élément de blindage (10a-b, 12a-b) est maintenu sur la plaque de champ de cuisson (20a-b) dans au moins un état de fonctionnement de cuisson, l'unité de recouvrement (18a-b) étant maintenue par l'élément de blindage (10a-b, 12a-b, 14a-b, 16a-b) dans au moins un état de fonctionnement de cuisson.

2. Dispositif de champ de cuisson selon la revendication 1, **caractérisé en ce que** l'unité de recouvrement (18a-b) entoure l'élément de blindage (10a-b, 12a-b, 14a-b, 16a-b) au moins en partie.

3. Dispositif de champ de cuisson selon l'une quelconque des revendications précédentes, **caractérisé par** une unité d'alimentation en courant (26a-b) qui est maintenue par l'élément de blindage (10a-b, 12a-b, 14a-b, 16a-b) dans au moins un état de fonctionnement de cuisson.

4. Dispositif de champ de cuisson selon la revendication 3, **caractérisé en ce que** l'unité d'alimentation en courant (26a-b) est maintenue par l'unité de recouvrement (18a-b) dans au moins un état de fonctionnement de cuisson.

5. Dispositif de champ de cuisson selon la revendication 3 ou 4, **caractérisé en ce que** l'unité d'alimentation en courant (26a-b) présente au moins un élément de support d'électronique (28a-b) et au moins un corps de refroidissement (30a-b) qui est disposé sur un côté, détourné de l'élément de blindage (10a-b, 12a-b, 14a-b, 16a-b), de l'élément de support d'électronique (28a-b).

6. Dispositif de champ de cuisson selon l'une quelconque des revendications précédentes, **caractérisé par** au moins un élément chauffant (32a-b, 34a-b, 36a-b, 38a-b, 40a-b, 42a-b) lequel est maintenu par l'élément de blindage (10a-b, 12a-b, 14a-b, 16a-b) dans au moins un état de fonctionnement de cuisson.

7. Dispositif de champ de cuisson selon l'une quelconque des revendications précédentes, **caractérisé par** au moins un élément de maintien d'écart (44a-b) sur lequel est maintenue l'unité de recouvrement (18a-b).

8. Champ de cuisson, notamment champ de cuisson à induction, comprenant un dispositif de champ de cuisson selon l'une quelconque des revendications précédentes.
